# EUROPÄISCHE PATENTANMELDUNG

(11) **EP 1 762 369 A2**
(43) Veröffentlichungstag der Anmeldung: **14.03.2007**
(21) Anmeldenummer: 06010817.2
(22) Anmeldetag: 26.05.2006
(51) Int. Cl.: B29C 65/74

(54) **Verfahren zur Teilung von Kunststoffschaumfolie**

(30) Priorität: 26.08.2005 DE 102005040736
(71) Anmelder: Fagerdala Airofom AG, 4852 Rothrist (CH)
(72) Erfinder: Righi, Christoph, 5503 Schafisheim (CH); Flück, Stephan, 4852 Rothrist (CH)
(74) Vertreter: Kaewert, Klaus

(57) **Zusammenfassung**

Nach der Erfindung werden aus breiten Schaumfolienrollen durch thermische Schnitte schmale Schaumfolienrollen mit einer Dicke hergestellt, die vorzugsweise kleiner oder gleich 60mm ist.

## Beschreibung

Die Erfindung betrifft ein Verfahren zur Teilung von Kunststoffschaumfolie, insbesondere von Polyethylen(PE)Schaumfolie. Die zeitgemäße Herstellung von Kunststoffschaumfolie entspricht der Herstellung von ungeschäumten dünnen Kunststoffschaumfolien.

Ungeschäumte Kunststoff-Folie werden als Schläuche hergestellt.
Dabei wird der Kunststoff üblicherweise in einem Extruder in schmelzflüssige Form gebracht und anschließend durch eine ringförmige Düse aus dem Extruder ausgetragen.
Der Kunststoff wird üblicherweise als festes Granulat in den Extruder aufgegeben. Unter dem Druck des Extruders und durch die Erwärmung im Extruder erreicht der Kunststoff seinen Schmelzpunkt. Je nach Beschaffenheit des Kunststoffes ergibt sich ein höherer oder niedrigerer Schmelzpunkt. Bei PE liegt der Schmelzpunkt bei 110 bis 135 Grad Celsius.

Die als Schlauch aus der Düse austretende Schmelze verfestigt sich durch die eintretende Kühlung der Schmelze. Die Kühlung ist schon durch die Umgebungsluft so stark, dass der Schlauch von innen mit Luft, sogar mit Druckluft, beaufschlagt werden kann: Je nach Druck kommt es zu einer Aufweitung des Schlauches.
Nach ausreichender Kühlung kann der Schlauch aufgetrennt und zur Folie ausgebreitet und aufgewickelt werden, ohne dass die Gefahr eines Verklebens der Folie in dem Wickel bzw. in der Rolle entsteht.

Die Herstellung von geschäumter Kunststoff-Folie, nachfolgend Kunststoffschaumfolie genannt erfolgt wie die oben beschriebene Herstellung ungeschäumter Kunststoff-Folie mit dem Unterschied, dass in den Extruder ein Treibmittel aufgegeben und mit der Schmelze vermischt wird. Das Treibmittel kann in verschiedenen Aggregationsformen aufgegeben wird. Vorzugsweise wird das Treibmittel in flüssiger Form in die Schmelze gespritzt. In flüssiger Form verteilt sich das Treibmittel besonders gut in der Schmelze. Als Treibmittel kommen diverse Materialien in Betracht, zum Beispiel Kohlendioxid oder ein Kohlenwasserstoff wie Pentan. Unter dem bestehenden Extruderdruck wird das Treibmittel an einer Ausdehnung geändert. Bei Verlassen des Extruders kann das Treibmittel sich in der Schmelze ausdehnen. Dieser Vorgang wird als Aufschäumen bezeichnet. Die expandierenden Gase bewirken zugleich eine Kühlung der Schmelze.
Diese Kühlung erlaubt es, einen Schlauch in gleicher Weise wie oben beschrieben herzustellen, den Schlauch aufzutrennen, aufzufalten und als Schaumfolie aufzuwickeln.

Zeitgemäße Anlagen erzeugen einen Schlauch von 1m Durchmesser und mehr. Daraus ergibt sich eine Schaumfolienbreite von mehr als 3 m. In verschiedenen Anwendungen der Schaumfolie ist eine solche Breite ungeeignet. Dann stellt sich die Aufgabe, die breite Schaumfolie in schmalere Schaumfolien aufzutrennen.
Für den Trennvorgang wird die breite Schaumfolie üblicherweise mit scheibenförmigen Messern bearbeitet.
Das kann sich inline an die Auftrennung des extrudierten Schlauches anschließen. Das kann auch im Nachgang zu der Herstellung der breiten Schaumfolie erfolgen.

Die breite Schaumfolie neigt nicht zum selbständigen Aufwickeln.
Die Neigung wird mit abnehmender Breite immer größer.
Erfahrungsgemäß können Rollen, deren Schaumfolien eine Breite von weniger als 300 mm besitzen, durch selbständiges Aufwickeln erheblichen Aufwand verursachen. Bei Schaumfolienbreiten unter 80 mm wird die Handhabung der Rollen schon sehr kompliziert. Bei Schaumfolienbreite von unter 40 mm wird sogar das Aufwickeln schwierig.

Bei Schaumfolienbreiten unter 40mm wird zum Teil von Schaumprofilen gesprochen. Um ein selbständiges Aufwickeln zu verhindern werden Rollen aus solchen Schaumfolien in bestimmten Anwendungen an der Schnittfläche mit einem Kleber beschichtet. Das Wickeln soll die Schaumfolien in eine transportfreundliche und lagerfreundliche Form bringen. Der Nachteil ist, dass die Schaumfolien nach dem Aufwickeln und Abwickeln eine gekrümmte Form haben. Außerdem ist das Abwickeln ohne Abwickelvorrichtung sehr unhandlich. Zudem ist der Klebstoffauftrag für weitergehende Anwendungen zu aufwendig.

Der Erfindung liegt die Aufgabe zugrunde, ein Verfahren zu schaffen, mit dem die Herstellung und/oder die Handhabung von Rollen mit schmaler Schaumfolienbreite einfacher wird.

Dabei geht die Erfindung von einem Verfahren aus, bei dem Rollen mit breiter Schaumfolie erzeugt und diese Rollen mit Heizdrähten quer zur Rollenlängsrichtung thermisch durchschnitten werden. Wenn der elektrisch beheizte Draht mit dem Schaum in Berührung kommt und dabei eine Temperatur aufweist, die geringfügig höher als die Schmelztemperatur des Kunststoffes ist, dann kollabiert der mit dem Draht in Berührung kommende Schaum und gibt Raum für die weitere Bewegung des Drahtes. Der Schnitt ist sauber, wenn die Heizdrahttemperatur dicht genug an der Schmelztemperatur liegt.

Der thermische Schnitt mit einem elektrisch beheizten Draht ist bei Polystyrolschaum und dergleichen bekannt. Dabei werden jedoch bis auf eine Ausnahme Schaumblöcke in Platten geschnitten. Ein Beispiel ist die DE2508625A1. Dieser Vorschlag geht in der Beschreibungseinleitung von einem bis dahin üblichen Sägeschnitt aus. In dem Sägeschnitt werden erhebliche Risiken gesehen, die mit dem thermischen Schnitt vermieden werden können sollen. Die Praxis ist dem jedoch nicht gefolgt. Die Schaumblöcke werden weiterhin durch Sägen zu Platten zerlegt.

Zeitgleich mit der DE2508625A1 ist mit der US-PS 3797344 ein Verfahren vorgeschlagen worden, bei dem eine Folienrolle mit einem elektrisch beheizten Draht geschnitten wird. Auch dieser Vorschlag geht von einem mechanischen Schnitt als Stand der Technik aus. Bereits zu dieser Zeit war es üblich, die Folien mit umlaufenden Messern zu trennen. Dabei war es üblich, Folien von der Rolle abzuziehen und wieder aufzuwickeln. Dazwischen waren die umlaufenden Messer angeordnet und ist der Schnitt erfolgt. Dabei gab es schon Anlagen mit mehreren Messern auf einer Messerwalze, die mehrere gleichzeitige Schnitte erlaubten.
Auch gegenüber diesem Stand der Technik hat sich die Schneidtechnik mit elektrisch beheiztem Draht nicht durchsetzen können. Bis heute finden die mechanischen Schnitte weiter Anwendung. Das hat Kostengründe, aber auch Qualitätsgründe.
Ein weiterer Grund ist wohl, daß die Kunststoffschaumfolien auf einen Dorn aufgewickelt werden, welcher der Folienrolle den notwendigen Halt gibt. Nach Abziehen der Folienrolle von dem Dorn verliert die Folienrolle zum Teil ihre Festigkeit. Die dadurch bedingte Verformung macht einen genauen Schnitt noch viel schwieriger.

Die Erfindung wendet sich gleichwohl erneut der Anwendung thermischer Schnitte für die Zerlegung von Folien bzw. Folienrollen zu.
Die Erfindung hat nämlich erkannt, daß entstehende Folienrollen, die nur sehr schwierig zu handhaben sind, wenn sie aus der Verpackung gelöst werden. Dann entspannt sich die Rolle. Ihr Volumen nimmt zu. Zugleich wird die Rolle instabil. Es ist zwar bekannt, dem durch Aufbringen geringer Klebermengen zu begegnen. Der Kleberauftrag beinhaltet jedoch einen weiteren Arbeitsschritt in einer weiteren Arbeitsstation.

Der thermische Schnitt führt zu einem überraschenden Ergebnis, wenn der thermische Schnitt mit erhöhter Temperatur und/oder mit einer solchen Bewegung betrieben wird, daß mehr Schaum schmilzt, als für den bekannten Schnitt erforderlich ist. Der zusätzlich geschmolzene Schaum verursacht eine Schmelzemenge, die als dünne Haut die einzelnen Lagen in der Rolle übergreift. Die Haut soll die verschiedenen Lagen in der Rolle vorzugsweise als Lappen bzw. als Hautbrücken miteinander verbinden. Die Dicke soll vorzugsweise 0,4 mm nicht überschreiten. Günstiger sind geringere Dicken von höchsten 0,9 mm, vorzugsweise von höchstens 0,05mm und noch weiter bevorzugt von höchstens 0,01 mm.

Durch den thermischen Schnitt werden die einzelnen Lagen der Schaumfolie in der Rolle an den Schnittränder geringfügig miteinander verklebt. Durch die Verklebung werden die einzelnen Lagen erstens aneinander gehalten. Vorteilhafterweise ermöglicht die beim Schnitt erlangte Verbindung der Lagen die Herstellung viel schmalerer Rollenabschnitte als das oben beschriebene übliche Herstellungsverfahren.

Zweitens läßt sich der Schaumfolienstreifen leicht von dem abgetrennten Rollenabschnitten abziehen. Je dünner die verbindende Haut ist und je geringer die Zahl der die Lagen verbindenden Hautbrücken ist, desto leichter ist das Abziehen.
Dies läßt sich nach Bedarf einstellen.

Nach der Erfindung kann auch das Problem des Dornes oder des Rollenkernes gelöst werden, indem ein Dorn oder Kern für die Aufwicklung der Rolle verwendet wird, der durch ein Verbrauchsmaterial aus Kunststoffschaum gebildet wird. Dieser Dorn oder Kern kann in der Rolle verbleiben und wird bei der Zerlegung der Rolle mit durchschnitten. Günstig ist, wenn eine liegende Rolle dabei an der Unterseite unterstützt wird. Als Stützen sind Bleche oder Roste oder Stützrollen geeignet, zwischen denen ausreichender Spielraum für das Durchtreten bzw. Austreten des Heizdrahtes besteht.

Stehende Schaumfolienrollen können bei ausreichendem Durchmesser aus sich heraus eine ausreichende Standfestigkeit haben, um in dieser Position durchschnitten werden zu können. Wo die Standfestigkeit fraglich ist, ist vorzugsweise eine Aufnahme der Schneidkräfte durch eine seitliche Stütze vorgesehen. Die Stütze sollte dann im Schneidbereich ausreichenden Spielraum zum Austritt der Schneidvorrichtung besitzen.

Wahlweise handelt es sich bei dem Dorn um einen wieder verwendbaren Dorn, der nicht durchtrennt werden und während der Rollenzerlegung in der Rolle bleiben soll. Mit dem Dorn kann die Rolle sehr einfach fixiert werden. In dem Fall ist vorzugsweise ein Schnitt vorgesehen, der um den Dorn herum geführt wird.

Wahlweise wird der Dorn bei der Zerlegung ganz oder teilweise entfernt.

Die teilweise Entfernung kann beinhalten, dass der Dorn schrittweise aus der Rolle herausgezogen wird oder dass die Rolle schrittweise von dem Dorn heruntergezogen wird. Vorzugsweise ergibt sich dann ein Überstand der Rolle gegenüber dem Dorn. Bei liegender Rollenanordnung ist der Überstand ein Überhang. In der stehenden Rollenanordnung bleibt der Überstand ein Überstand. Nach der Erfindung wird dieser Überstand abgeschnitten.
In der liegenden Rollenanordnung bietet sich zugleich die Möglichkeit den abgeschnittenen Rollenteil nach unten auf eine Fördereinrichtung fallen oder rutschen zu lassen. Günstig ist aber, den Überhang während des Schneidvorganges von unten und/oder seitlich zu stützen, um eine Veränderung des Überhanges während des Schneidvorganges zu vermeiden. In der stehenden Rollenanordnung kann bei ausreichender Eigensteifigkeit der Rolle ein Stützen entbehrlich sein.

Bei vollständiger Entfernung des Dornes aus der Rolle kann gleichwohl eine Zerlegung der liegenden Rolle stattfinden, indem die Rolle in der oben beschriebenen Form an der Unterseite unterstützt wird.
Vorzugsweise liegt die Rolle dabei in einer Rinne, die im Schneidbereich mit einem Schlitz versehen ist, der den Austritt der Scheidvorrichtung aus der Rolle erlaubt. Die Form des Schlitzes wird dann durch die Schneidvorrichtung und von deren Bewegung bestimmt.
Bei stehender Anordnung der Rolle kann bei geringer Eigensteifigkeit der Rolle ein ähnlicher Schlitz in der dann vorgesehenen seitlichen Stütze erforderlich werden. Bei ausreichender Steifigkeit der stehenden Rolle kann auf die Stütze verzichtet werden. Dann stellt sich die Frage des Schlitzes nicht.

Der Schneidvorgang kann dadurch stattfinden, dass die Schneidvorrichtung bewegt wird und/oder die Folienrolle bewegt wird oder beides bewegt wird. Bei dem Schneidvorgang kann die Schaumfolienrolle stehen oder liegen.

Wahlweise wird die Rolle auch zwischen Klemmbacken aufgenommen.
Ein Schnitt findet dann statt, wenn die Rolle ein ausreichendes Maß aus den Klemmbacken vorragt. Nach jedem Schnitt werden die Klemmbacken gelöst, um die Rolle zum nächsten Schnitt vorzuschieben.

Das Maß des Überhanges bestimmt die Dicke des abgeschnittenen Schaumfolienrollenteils. Dieses Maß läßt sich mit Hilfe einer verstellbaren Führung bzw. Anschlages leicht bestimmen. Mit dem Anschlag bzw. der Führung läßt sich nämlich die Lage der Rolle in axialer Richtung in Bezug auf die Schneidvorrichtung in einfacher Weise festlegen. Die Rolle wird dann mit einer Stirnfläche gegen die Führung oder Anschlag geschoben. Eine Änderung der gewünschten Dicke bzw. des gewünschten Überhanges erfolgt dann durch Verstellung des Anschlages bzw. der Führung. Bei dieser Lösung kann die Schneidvorrichtung immer von der gleichen Ausgangsposition in Gang gebracht werden, d. h. ist eine Verstellung der Schneidvorrichtung in axialer Richtung der Rolle entbehrlich.
Etwas anderes kann gelten, wenn kein verstellbarer Anschlag oder keine verstellbare Führung vorgesehen ist. Dann kann eine Verstellbarkeit der Schneidvorrichtung in axialer Richtung der Rolle zweckmäßig sein.
Die Verstellbarkeit der Schneidvorrichtung in axialer Richtung der Rolle ist auch für eine erfindungsgemäße Zerlegung einer stehenden Rolle von Vorteil.

Unabhängig von der Verwendung von Anschlägen und Führungen kann eine Verstellbarkeit der Schneidvorrichtung in axialer Richtung der Rolle in Verbindung mit einer Meßeinrichtung und in Verbindung mit einem Rechner von Vorteil sein. Die Meßeinrichtung kann dabei die Lage der Rolle und die Lage der Schneidvorrichtung bestimmen. Der Rechner kann aus diesen Angaben und der gewünschten Dicke des Überhanges oder Überstandes die bei liegender Rolle oder stehender Rolle erforderliche Stellung der Schneidvorrichtung bestimmen und die Schneidvorrichtung in die richtige Position bringen. Je nach angewendetem Verfahren kann der Rechner auch den Überhang einer liegenden Rolle auf einem Dorn durch Verschiebung der Rolle und/oder Verschiebung des Dornes bestimmen.

Wahlweise wird die Schnitte in obigem Sinne nacheinander durchgeführt. Wahlweise können auch mehrere Schnitte gleichzeitig durchgeführt werden. Dazu ist vorzugsweise eine Schneidvorrichtung mit mehreren parallel nebeneinander angeordneten Schneiddrähten vorgesehen. Das verkürzt den Zerlegungsvorgang einer Rolle.
Das bietet sich insbesondere dann an, wenn eine ausreichende Menge gleicher Zerlegungsvorgänge anstehen.

Wahlweise sind die Schneiddrähte in sich so stabil, dass sie eine gewünschte Form, auch Wölbungen und Ecken bilden können. Die Stabilität bedingt entsprechend große Abmessungen.
Vorzugsweise sind jedoch dünne Schneiddrähte vorgesehen, die nur in gerade gespannter Form die notwendige Stabilität für den Schnitt besitzen. Wahlweise ist mindestens an einem Drahtende eine Feder vorgesehen. Die Feder verhindert eine Überlastung des Drahtes.

Die verwendeten Schneiddrähte werden vorzugsweise elektrisch beheizt. Die elektrische Beheizung läßt sich leicht steuern bzw. regeln. Das geschieht durch Änderung des Stromflusses.
Die verwendeten Schneiddrähte können einen Durchmesser besitzen, der kleiner oder gleich 1mm ist. Vorzugsweise besitzen die Schneiddrähte für das Schneiden von PE-Schaum mit einem Raumgewicht bis 40 kg pro Kubikmeter und einem Rollendurchmesser bis 1 m einen Durchmesser, der kleiner oder gleich 0,8 mm, noch weiter bevorzugt kleiner als 0,6mm und höchst bevorzugt kleiner als 0,5mm ist.
Vorzugsweise ist der Durchmesser der Schneiddrähte größer oder gleich 0,4 mm.

Die Schneiddrähte können während des Schnittes oszillierend bewegt werden. Die oszillierende Bewegung kann sowohl in Längsrichtung des Drahtes als auch quer zur Längsrichtung des Drahtes erfolgen oder in beiden Richtungen erfolgen und überlagert die Vorschubbewegung der Schneiddrähte. Der Hub der oszillierenden Bewegung des Schneiddrahtes kann dabei in Vorschubrichtung bis 30 mm, vorzugsweise bis 20mm betragen.
Erfindungsgemäß wird diese Bewegung wahlweise noch überlagert durch eine Bewegung der Schneidrähte quer zur Vorschubrichtung des Drahtes. Damit wird weiterer Kunststoffschaum aufgeschmolzen, der allein oder zusammen mit anderem aufgeschmolzenem Kunststoffschaum die Hautbrücken bildet.

Das Maß der erfindungsgemäßen Verklebung wird vorzugsweise über die Temperatur des Heizdrahtes und über die Vorschubgeschwindigkeit geregelt, mit der der Schneiddraht durch die Schaumfolienrolle geführt wird. Die Vorschubgeschwindigkeit ist die Schneidgeschwindigkeit.

Durch den thermischen Schnitt entsteht auf den Schneidflächen eine Verhautung. Darüber hinaus ergeben sich dünne Hautbrücken, welche die nebeneinander liegenden Lagen der Schaumfolie in der Rolle ganz oder teilweise verbinden. Die Hautbrücken können auch als Materialfusel bezeichnet werden. Auf der Länge des Stoßes von aneinander liegenden Lagen der Schaumfolie ergeben sich bei bevorzugter Anwendung des erfindungsgemäßen Verfahrens viele nebeneinander und im Abstand voneinander liegende Hautbrücken. Die Abstände zwischen den Hautbrücken lassen die sich dadurch ergebenden Löcher wie Perforationslöcher erscheinen.
Die Hautdicke in den Hautbrücken kann minimal sein. Gleichwohl reicht auch eine minimale Hautdicke aus, um die verschiedenen Lagen der Schaumfolie in der Rolle zu fixieren. Je nach Beheizung des Heizdrahtes und je nach Vorschubgeschwindigkeit und je nach Beschaffenheit der Folie ergeben sich bei PE-Schaum mit einem Raumgewicht bis 40 kg pro Kubikmeter Hautbrücken mit einer Dicke von 0,005 bis 0,4mm.

Vorzugsweise wird eine Temperatur an dem als Schneidvorrichtung dienenden Heizdraht eingestellt. Die Temperatur wird in Abhängigkeit
a)von der Vorschubgeschwindigkeit
b)davon eingestellt, ob der Schneiddraht nur in Vorschubrichtung und in Längsrichtung des Drahtes eine oszillierende Bewegung ausführt oder ob diese Bewegung noch von einer Bewegung quer zur Vorschubrichtung überlagert wird, die auch quer zur Längsrichtung des Drahtes verläuft
c)und in Abhängigkeit von dem Kunststoffschaum eingestellt.

Die Amplitude der zusätzlichen Bewegung ist einstellbar.
Mindestens beträgt die Amplitude 0,5mm, vorzugsweise mindestens 1mm und noch weiter bevorzugt mindestens 1,5mm und höchst bevorzugt mindestens 2mm.

Bei der unten erläuterten Vorschubgeschwindigkeiten und Schaumbeschaffenheit und bei einer zusätzlichen Bewegung quer zur Vorschubrichtung und zur Drahtlängsrichtung liegt die Temperatur vorzugsweise maximal bis 10 Grad Celsius und noch weiter bevorzugt bis 5 Grad Celsius oberhalb der Schmelztemperatur. Die richtige Temperatur und Schneidgeschwindigkeit wird ein kommerzieller Anbieter solcher Schneiddrähte angeben. Wenn die richtige Temperatur und die richtige Schneidgeschwindigkeit fehlen, lassen sich diese mit wenigen Versuchen eingestellen. Dabei ist es zweckmäßig, einen Probeschnitt mit einer Temperatur ganz nahe bei dem Schmelzpunkt zu beginnen. Dabei ergibt sich eine geringe Vorschubgeschwindigkeit für den Schneiddraht. Die Temperatur wird dann gesteigert, zugleich läßt sich die Vorschubgeschwindigkeit des Schneiddrahtes erhöhen. Das geschieht solange, wie die Schneidfläche sauber bleibt.
Die erfinderische Maßnahme zur Erzeugung zusätzlicher Schmelzemenge kann an der Stelle durch weitere Erhöhung der Temperatur einsetzen. Dies kann mit oder ohne zusätzliche Bewegung des Schneiddrahtes quer zur Vorschubrichtung und quer zur Drahtlängsrichtung erfolgen.

Die erhöhte Schneiddrahttemperatur bewirkt eine für die Hautbrücken gewünschte Aufschmelzung von zusätzlichem Kunststoffschaum. Gemessen an der Schneiddrahttemperatur ohne zusätzliche Aufschmelzleistung beträgt die Temperaturerhöhung für die zusätzliche Aufschmelzleistung vorzugsweise mindestens 5 Grad Celsius. Vorzugsweise mindestens 10 Grad Celsius.

Bei der Durchtrennung der Schaumfolienrolle gibt der Heizdraht an der Schnittfläche seine Wärme an die Schaumfolie ab. Wo keine Berührung des Heizdrahtes mit der Schaumfolie stattfindet, ist nach der Erfindung eine Kühlung des Heizdrahtes mit Luft vorgesehen, um dort einen gleichen Wärmeverlust zu erzeugen. Die Kühlung verhindert eine Überhitzung des Heizdrahtes an den Stellen, an denen keine Berührung mit der Schaumfolie besteht. Das schont den Heizdraht und erhöht die Regelfähigkeit.
Für die Luftkühlung ist ausreichend, wenn die Schaumfolienrolle von einem oder mehreren Gebläsen mit Kühlluft umspült wird.

Die Vorschubgeschwindigkeit beträgt bei PE-Schaum mit einem Raumgewicht bis 40 kg pro Kubikmeter und einer Rollendicke bis 1m sowie einem Schneiddrahtdurchmesser von 0,4 bis 0,5 mm bis maximal 0,6 Meter pro Minute, vorzugsweise bis 0,55 Meter pro Minute
Vorzugsweise werden auch die Temperatur und/oder die Vorschubgeschwindigkeit mit dem oben erwähnten Rechner gesteuert.

Für jeden Schaumstoff ergeben sich unterschiedliche Bedingungen.

In der Zeichnung ist ein Ausführungsbeispiel der Erfindung dargestellt.

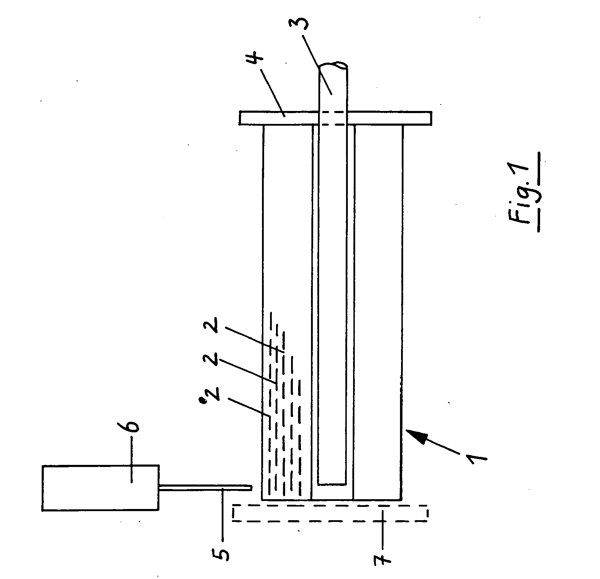

In Fig. 1 ist mit 1 eine liegende Schaumfolienrolle aus PE bezeichnet, die durch Extrusion eines Schaumfolienschlauches, anschließendes Auftrennen des Schaumfolienschlauches, Auffalten des Schaumfolienschlauches und dessen Aufwickeln entstanden ist. In der Schaumfolienrolle 1 befinden sich diverse Lagen 2 der Schaumfolie, die übereinander liegen.

Bei dem dargestellten Verfahren wird die Schaumfolienrolle 1 von einem Stahldorn 3 gehalten. Dabei liegt die Schaumfolienrolle 1 an einem ortsfesten Kragen an. Der Dorn 3 ist verschiebbar angeordnet und wird zum Abtrennen einer schmalen Schaumfolienrolle von der Schaumfolienrolle 1 ein entsprechendes Stück aus der Schaumfolienrolle 1 herausgezogen. Dadurch steht die Schaumfolienrolle 1 gegenüber dem Dorn 3 ein Stück vor. Das vorragende Stück wird mit einem Heizdraht 5 durchtrennt. Der Heizdraht 5 wird dazu auf einer Temperatur gehalten, welche über dem Schmelzpunkt von PE liegt.
Der Heizdraht 5 wird mit einer Mechanik 6 bewegt.
Die Mechanik 6 kann entsprechend der jeweils gewählten Schnittstellung entlang der Schaumfolienrolle verschoben werden.

Im Ausführungsbeispiel befindet sich der Heizdraht 5 in der Ausgangsstellung über der Schaumfolienrolle 1. Nach dem Durchtrennen der Schaumfolienrolle 1 fällt der abgetrennte Schaumfolienrollenteil nach unten auf ein Förderband oder in einen Sammelbehälter.
In anderen Ausführungsbeispielen ist der Heizdraht in der Ausgangsstellung seitlich von der Schaumfolienrolle 1 angeordnet oder in der Ausgangstellung unterhalb der Schaumfolienrolle angeordnet.

In einem weiteren Ausführungsbeispiel ist eine ortsfeste Anordnung des Dornes 3 und eine verschiebbare Anordnung des Kragens 4 vorgesehen, so dass die Mechanik 6 immer an der gleichen Stelle stehen kann und die Schaumfolienrolle 1 mit dem Kragen 4 in die jeweils gewünschte Stellung unter dem Heizdraht 5 geschoben werden kann.

In den verschiedenen Ausführungsbeispielen kann ein Führungsblech 7 von Vorteil sein. Das Führungsblech 7 hindert den abgetrennten Schaumfolienrollenteil an einem seitlichen Abkippen.
In der Variante mit dem verschiebbaren Kragen 4 kann das Führungsblech zugleich als Anschlag für die verschobene Schaumfolienrolle dienen.

Dabei empfiehlt sich ein auf die Dicke der abzutrennenden Schaumfolienrollenteile einstellbares Führungsblech. Die Einstellbarkeit wird durch eine Verstellbarkeit in Rollenlängsrichtung gewonnen.

Im Ausführungsbeispiel entstehen durch Abtrennung von Schaumfolienrollenteilen neue Schaumfolienrollen bzw. Rollenabschnitte mit einer Dicke von 10mm bis 300 mm, wahlweise auch mit einer Dicke, die gleich oder kleiner 60mm ist.

Fig. 2 zeigt eine Rinne zur Zerlegung einer liegenden Schaumfolienrolle. Die dargestellte Rinne besteht aus zwei Teilen 10 und 12 mit einem zwischenliegenden Schlitz 11. Die Rinne umfasst und stützt die Schaumfolienrolle so gut, dass eine Zerlegung der breiten Schaumfolienrolle ohne zusätzliche Halterung der Rolle mit einem Dorn möglich ist. Bei der Zerlegung schneidet ein in einem Bügel gehaltener Heizdraht von oben in die Schaumfolienrolle. Dabei bewegt sich der Heizdraht in den Schlitz 11.

Fig. 2 zeigt zusätzlich einen verstellbaren Anschlag 13, der in die Rinne ragt, so dass die Schaumfolienrolle an dem Anschlag 13 zur Anlage gebracht werden kann. Die Stellung des Anschlages 13 in der Rinne bestimmt die Dicke des abgetrennten Schaumfolienrollenteils. Durch Verstellung des Anschlages 13 in der Rinne kann die Dicke des abgetrennten Schaumfolienrollenteils vergrößert oder verringert werden.

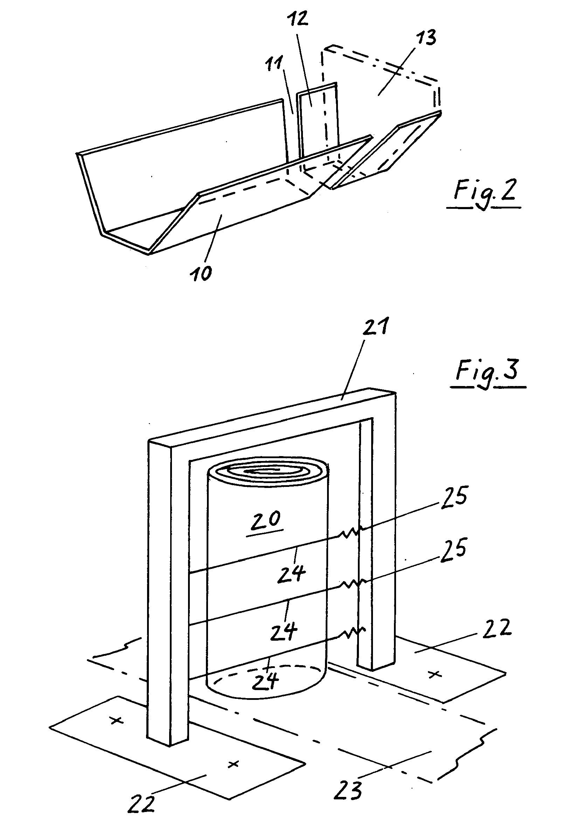

Fig. 3 zeigt eine Schneidvorrichtung für stehende Schaumfolienrollen 20 aus PE. Die Schaumfolienrollen 20 haben im Ausführungsbeispiel einen Durchmesser von 800 mm und eine Länge 2000 mm und sollen in Teile von 200 mm zerlegt werden. Dazu sind neun Schneiddrähte 24 mit aus Kupfer mit einem Durchmesser von 0,46 mm vorgesehen. Von den neun Drähten sind nur drei dargestellt.
Die Schneiddrähte 24 sind in einem Rahmen 21 angeordnet, der in der Werkstatthalle mit Fußblechen 22 fest angeordnet ist. Jeder Draht 24 ist an einem Ende mit einer Feder 25 gespannt. Die Drähte 24 sind stromdurchflossen. Dazu ist eine entsprechende Isolierung vorgesehen. Der Strom verursacht im Ausführungsbeispiel eine Temperatur von 100 Grad Celsius. In anderen Ausführungsbeispielen eine Temperatur von 95 bis 105 Grad Celsius. Die beheizten Drähte werden mit Kühlluft so stark beaufschlagt, dass sich in etwa diese Wärme auch dann einstellt, wenn noch keine Berührung der Drähte mit dem PE-Schaum eingestellt hat.

Die Schaumfolienrollen 20 stehen auf einem Förderband, das mit einer Geschwindigkeit von 0,55 Meter pro Minute bewegt wird und den Rahmen 21 führt. Dabei drückt die Schaumfolienrolle 20 gegen die beheizten Drähte 24 mit der Folge, dass der vom beheizten Draht berührte Schaum kollabiert und dem Draht die Durchdringung der Rolle möglich macht.
Während der Durchdringung der Rolle wird die Temperatur des Drahtes gemessen und gegebenenfalls nachgeregelt.

Im Ergebnis findet nicht nur eine Teilung statt. Es bilden sich an der Schnittfläche auch Lagen übergreifende Folienbrücken, die ein selbständiges Aufwickeln der abgetrennten Teile verhindern.

In anderen Ausführungsbeispielen ist die Anlage zum Zerlegen der Folienrolle der Vorrichtung nachgebildet, die aus der US-PS-3797344 bekannt ist.

## Patentansprüche

1. Verfahren zur Herstellung schmalerer Schaumfolienrollen aus einer breiteren Schaumfolienrolle, wobei eine Durchtrennung der Schaumfolienrolle mit einem Heizdraht quer zu deren Längsachse, **dadurch gekennzeichnet, dass** der Heizdraht so stark erwärmt wird und beim Durchtrennen der Schaumfolienrolle auf dieser Temperatur gehalten wird, daß an den Schnittflächen durch den thermischen Schnitt Hautbrücken erzeugt werden, welche ganz oder teilweise die Lagen an der Schnittfläche in lösbarer Weise miteinander verbinden.

2. Verfahren nach Anspruch 1, **dadurch gekennzeichnet, dass** die breite Schaumfolienrolle bei der Zerlegung steht oder liegt und/oder die Schaumfolienrolle und/oder das Schneidwerkzeug bewegt wird.

3. Verfahren nach einem der Ansprüche 1 oder 2, **dadurch gekennzeichnet, dass** eine gerader Schnitt oder ein umlaufender Schnitt ausgeführt wird.

4. Verfahren nach Anspruch 3, **dadurch gekennzeichnet, dass** die breite Schaumfolienrolle während des Schnittes auf einem Dorn gehalten wird und
a)der Dorn in der Rolle verbleibt und bei dem Schnitt mit durchtrennt wird oder
b)der Dorn in der Rolle verbleibt und der Schnitt um den Dorn herumgeführt wird oder
c)der Dorn vor dem Schnitt zumindest teilweise aus der Rolle herausgezogen wird, so dass der Schnitt durch den vorragenden Rollenteil an dem Dorn vorbei erfolgt oder
d)die Rolle vor dem Schnitt zumindest teilweise von dem Dorn geschoben wird, so dass der Schnitt durch den vorragenden Rollenteil an dem Dorn vorbei erfolgt oder
e)die Rolle ohne Dorn zerlegt wird.

5. Verfahren nach Anspruch 3 oder 4, **dadurch gekennzeichnet, dass** die Rolle beim Schnitt zwischen Klemmbacken gehalten wird.

6. Verfahren nach Anspruch 3 oder 4, **dadurch gekennzeichnet, dass** die Rolle beim Schnitt unten unterstützt wird und/oder seitlich gestützt wird.

7. Verfahren nach Anspruch 6, **gekennzeichnet durch** die Verwendung einer Rinne zur Stützung der Rolle.

8. Verfahren nach Anspruch 7, **dadurch gekennzeichnet, dass** die Stütze die Schneideinrichtung aus der Rolle austreten läßt.

9. Verfahren nach einem der Ansprüche 2,3 und 6 bis 8, **gekennzeichnet durch** die Verwendung eines in axialer Richtung verschiebbaren Dornes und/oder eines in axialer Richtung des Dornes verschiebbaren Kragens und/oder einer in axialer Richtung des Dornes verschiebbaren Führung und/oder einer in axialer Richtung des Dornes verstellbaren Schneideinrichtung und/oder einer Bewegung der Rolle gegen die Schneidvorrichtung.

10. Verfahren nach Anspruch 9, **gekennzeichnet durch** Verwendung eines Förderbandes zur Bewegung der Rolle.

11. Verfahren nach einem der Ansprüche 1 bis 10, **gekennzeichnet durch** die Verwendung eines Heizdrahtes als Schneidvorrichtung.

12. Verfahren nach Anspruch 11, **gekennzeichnet durch** die Verwendung eines gespannten Heizdrahtes.

13. Verfahren nach Anspruch 12, **gekennzeichnet durch** Verwendung einer Feder für die Spannung.

14. Verfahren nach einem der Ansprüche 11 bis 13, **gekennzeichnet durch** Verwendung eines Heizdrahtes mit einem Durchmesser kleiner oder gleich 1 mm, vorzugsweise einem Durchmesser kleiner oder gleich 0,8mm und noch weiter bevorzugt kleiner oder gleich 0,6 mm und höchst bevorzugt kleiner oder gleich 0,5mm ist.

15. Verfahren nach Anspruch 14, **gekennzeichnet durch** Verwendung eines Heizdrahtes, dessen Durchmesser größer als 0,4 mm ist.

16. Verfahren nach einem der Ansprüche 12 bis 16, **gekennzeichnet durch** eine Heizdrahttemperatur, die höchstens 10 Grad Celsius, vorzugsweise höchstens 5 Grad Celsius von dem Schmelzpunkt des Kunststoffes in der Schaumfolienrolle abweicht.

17. Verfahren nach einem der Ansprüche 11 bis 16, **gekennzeichnet durch** eine Schnittgeschwindigkeit bis maximal 0,6 m pro Minute, vorzugsweise bis 0,55 Meter pro Minute.

18. Verfahren nach einem der Ansprüche 11 bis 17, **dadurch gekennzeichnet, dass** die nicht in Berührung mit der Schaumfolienrolle stehenden Heizdrahtbereiche gekühlt werden.

19. Verfahren nach Anspruch 18, **gekennzeichnet durch** eine Luftkühlung.

20. Verfahren nach einem der Ansprüche 11 bis 19, **gekennzeichnet durch** eine oszillierende Drahtbewegung, wobei die Bewegungsrichtung quer zur und/oder in Richtung der Schneidbewegung erfolgt.

21. Verfahren nach Anspruch 20, **gekennzeichnet durch** einen Hub der Oszillationsbewegung von höchstens 30mm, vorzugsweise einen Hub von höchstens 20mm.

22. Verfahren nach einem der Ansprüche 1 bis 21, **gekennzeichnet durch** Verwendung eines Rechners zur Steuerung der Temperatur und/oder der Schneidgeschwindigkeit und/oder der Stellung der Schneidvorrichtung.

23. Vorrichtung, hergestellt nach einem der Ansprüche 1 bis 22, **gekennzeichnet durch** Schaumfolienrollen, bei denen die Folienlagen an den Stirnflächen **durch** Hautbrücken miteinander verbunden sind.

24. Vorrichtung nach Anspruch 23, **dadurch gekennzeichnet, dass** die Hautbrücken eine Dicke bis 0,4 mm besitzen.

25. Vorrichtung nach Anspruch 24, **dadurch gekennzeichnet, daß** die Hautbrücken eine Dicke bis 0,09 mm besitzen.

26. Vorrichtung nach Anspruch 25, **dadurch gekennzeichnet, daß** die Hautbrücken eine Dicke bis 0,05mm besitzen.

27. Vorrichtung nach Anspruch 26, **dadurch gekennzeichnet, daß** die Hautbrücken eine Dicke bis 0,02mm besitzen.
